# EUROPEAN PATENT SPECIFICATION

(11) **EP 3 815 599 B1**
(45) Date of publication and mention of the grant of the patent: **17.09.2025**
(21) Application number: 18924990.7
(22) Date of filing: 29.06.2018
(51) Int. Cl.: G06T 5/50, G06T 5/60

(54) **OPHTHALMIC IMAGE PROCESSING DEVICE, OCT DEVICE, OPHTHALMIC IMAGE PROCESSING PROGRAM, AND MATHEMATICAL MODEL BUILDING METHOD**
OPHTHALMISCHE BILDVERARBEITUNGSVORRICHTUNG, OCT-VORRICHTUNG, OPHTHALMISCHES BILDVERARBEITUNGSPROGRAMM UND VERFAHREN ZUM ERSTELLEN EINES MATHEMATISCHEN MODELLS
DISPOSITIF DE TRAITEMENT D'IMAGE OPHTALMIQUE, DISPOSITIF OCT, PROGRAMME DE TRAITEMENT D'IMAGE OPHTALMIQUE, ET PROCÉDÉ DE CONSTRUCTION DE MODÈLE MATHÉMATIQUE

(43) Date of publication of application: 05.05.2021
(73) Proprietor: Nidek Co., Ltd., Gamagori-shi, Aichi, 443-0038 (JP)
(72) Inventor: SAKASHITA, Yusuke, Gamagori-shi Aichi 443-0038 (JP); KUMAGAI, Yoshiki, Gamagori-shi Aichi 443-0038 (JP); SHIBA, Ryosuke, Gamagori-shi Aichi 443-0038 (JP); TAKENO, Naoki, Gamagori-shi Aichi 443-0038 (JP)
(74) Representative: Hoefer & Partner Patentanwälte mbB
(86) International application number: PCT/JP2018/024915
(87) International publication number: WO 2020/003524

(56) References cited:
- EP-A1- 3 404 611
- JP-A- 2015 009 108
- JP-A- H1 131 214
- US-A1- 2013 051 516
- CECILIA S. LEE ET AL: "Generating retinal flow maps from structural optical coherence tomography with artificial intelligence", BIORXIV, 25 February 2018 (2018-02-25), XP055676223, Retrieved from the Internet <URL:https://www.biorxiv.org/content/10.1101/271346v1.full.pdf> [retrieved on 20200312], DOI: 10.1101/271346
- SPAIDE RICHARD F. ET AL: "Optical coherence tomography angiography", PROGRESS IN RETINAL AND EYE RESEARCH, vol. 64, 8 December 2017 (2017-12-08), GB, pages 1 - 55, XP055881202, ISSN: 1350-9462, DOI: 10.1016/j.preteyeres.2017.11.003
- KERRY J. HALUPKA ET AL: "Retinal optical coherence tomography image enhancement via deep learning", BIOMEDICAL OPTICS EXPRESS, vol. 9, no. 12, 13 November 2018 (2018-11-13), United States, pages 6205, XP55675656, ISSN: 2156-7085, DOI: 10.1364/BOE.9.006205
- CECILIA S. LEE ET AL: "Generating retinal flow maps from structural optical coherence tomography with artificial intelligence", BIORXIV, 25 February 2018 (2018-02-25), XP55676223, Retrieved from the Internet <URL:https://www.biorxiv.org/content/10.1101/271346v1.full.pdf> [retrieved on 20200312], DOI: 10.1101/271346
- SPAIDE RICHARD F. ET AL: "Optical coherence tomography angiography", PROGRESS IN RETINAL AND EYE RESEARCH, vol. 64, 8 December 2017 (2017-12-08), GB, pages 1 - 55, XP55881202, ISSN: 1350-9462, DOI: 10.1016/j.preteyeres.2017.11.003
- KITAJMA MIKA : "Deep Learning Reconstruction", INNERVISION , vol. 33, no. 5, 25 April 2018 (2018-04-25), pages 6 - 7, XP009525639, ISSN: 0913-8919
- KENZO ISOGAWA; TAKASHI IDA; TAICHIRO SHIODERA; TOMOYUKI TAKEGUCHI: "Deep Shrinkage Convolution Neural Network for Adaptive Noise Reduction", IEEE SIGNAL PROCESSING LETTERS , vol. 25, no. 2, February 2018 (2018-02-01), pages 224 - 228, XP055508221, ISSN: 1070-9908, DOI: 10.1109/LSP.2017.2782270

## Description

### Technical Field

The present disclosure relates to an ophthalmic image processing device that processes an ophthalmic image of a subject eye, an OCT device, an ophthalmic image processing program that is executed in the ophthalmic image processing device, and a mathematical model building method for building a mathematical model used by the ophthalmic image processing device.

### Background Art

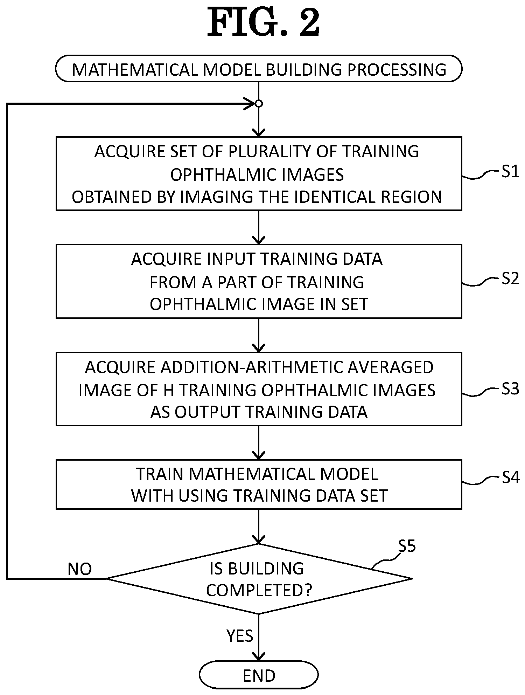

In the related art, various techniques for acquiring images having high image quality have been proposed. For example, an ophthalmic imaging device described in Patent Literature 1 performs the average processing on a plurality of tomographic images to suppress speckle noise so that a tomographic image having high image quality is acquired.
EP 3 404 611 A1 discloses a method of training a neural network for reducing noise in an image which comprises obtaining a plurality of input images from an imaging device. The method comprises generating a plurality of target images by combining a subset of the input images that each depict a same object, to reduce a noise of the target image. The method comprises generating a plurality of training pairs, wherein a training pair comprises one of the target images and a training image based on at least one but not all of the input images of the subset of input images corresponding to the one of the target image. The method comprises training a neural network using the plurality of training pairs.
US 2013 / 0 051 516 A1 discloses embodiments of methods and/or apparatus for 3-D volume image reconstruction of a subject, executed at least in part on a computer for use with a digital radiographic apparatus that can obtain image data for 2-D projection images over a range of scan angles. For each of the plurality of projection images, an enhanced projection image is generated.
Furthermore, Cecilia S. Lee et al: "Generating retinal flow maps from structural optical coherence tomography with artificial intelligence", bioRxiv, 25 February 2018 (2018-02-25), XP055676223, DOI: 10.1101/271346, Retrieved from the Internet: URL:https://www.biorxiv.org/content/10.1101/271346vl.full.pdf, discloses training an AI algorithm to generate flow maps from standard OCT images.
Spaide Richard F. et al: "Optical coherence tomography angiography", Progress in retinal and eye research, vol. 64, 8 December 2017 (2017-12-08), pages 1-55, XP55881202, GB, ISSN: 1350-9462, DOI: 10.1016/j.preteyeres.2017.11.003, figure 2, is a review of a development of OCT angiography and methods used therein.

### Citation List

### Patent Literature

Patent Literature 1: JP 2015 - 009 108 A

### Summary of Invention

In the technique of performing the average processing of the plurality of images, it is necessary to repeatedly image the same region many times so as to improve the accuracy of suppressing the influence of noise. Therefore, there is a problem that the imaging time increases in proportion to the number of images to be added.

A typical object of the present disclosure is to provide an ophthalmic image processing device, an OCT device, an ophthalmic image processing program, and a mathematical model building method for appropriately acquiring ophthalmic images having high image quality.
This object is solved by the features of the independent claims. The dependent claims contain advantageous embodiments of the present invention.

According to the ophthalmic image processing device, the OCT device, the ophthalmic image processing program, and the mathematical model building method of the present disclosure, ophthalmic images having high image quality are appropriately acquired.

The controller of the ophthalmic image processing device exemplified in the present disclosure acquires, as the base image, the ophthalmic image captured by the ophthalmic image capturing device or the averaged image obtained by averaging the plurality of ophthalmic images obtained by imaging the identical region of the tissue by the ophthalmic image capturing device. By inputting the base image into the mathematical model trained with using the machine learning algorithm, the controller acquires the target image having higher quality than the base image. The mathematical model is trained by a training data set, which is a set of the input training data and the output training data. The data based on the L (L ≥ 1) training ophthalmic image among the plurality of training ophthalmic images obtained by imaging the identical region of the tissue is used as the input training data. Further, the data of the averaged image obtained by averaging the H (H> L) training ophthalmic images among the plurality of training ophthalmic images is used as the output training data (sometimes it is referred to as correct answer data). In other words, H is a number greater than the number of the training ophthalmic images used for the input training data.

That is, the mathematical model building device that builds the mathematical model executes the image set acquisition step and the training step. In the image set acquisition step, a plurality of training ophthalmic images obtained by imaging the identical region of the tissue of the subject eye are acquired. In the training step, the mathematical model is built by training the mathematical model with using data based on the L (L ≥ 1) training ophthalmic image among the plurality of training ophthalmic images as the input training data, and with using data of the averaged image of the H (H > L) training ophthalmic images among the plurality of training ophthalmic images as the output training data.

In this case, even when a small number of images of the ophthalmic images or a small number of images of the ophthalmic images of the averaged image is input as the base image, the built mathematical model can output the target image in which the influence of noise is suppressed to the same extent as an image obtained by averaging a large number of images of the ophthalmic images. Therefore, it is easy to shorten the imaging time when capturing the base image. Further, even in the image processing in the related art, it is possible to suppress the influence of noise without performing the average processing. However, in the image processing in the related art, it is not possible to distinguish between a weak signal and noise, and there is a case where a weak signal that is originally necessary is erased. In contrast, the mathematical model exemplified in the present disclosure can output a target image based on a base image in which a portion where the signal of the image is weakened due to an influence other than noise is not erased. Therefore, ophthalmic images having high quality are appropriately acquired.

Note that the data used as the input training data of the training data set (that is, "data based on the L training ophthalmic image") may be the data of the captured ophthalmic image itself (that is, the original image not added and averaged), or the data of the averaged image obtained by averaging the plurality of ophthalmic images. Both the original image data and the averaged image data may be used as the input training data. When the input training data is the data of the original image, it is desirable that the base image to be input into the mathematical model is also the original image which is not averaged. Further, when the input training data is the data of the averaged image, it is desirable that the base image is also the averaged image. Further, the number of images of the image (at least one of the original image and the averaged image) used for the input training data may be one or may be a plurality of images (for example, substantially 2 to 5 images). Further, the number H of the training ophthalmic images used when generating the averaged image used as the output training data is at least larger than the number of the training ophthalmic images used for the input training data. For example, when L original images are used as the input training data, it satisfies H > L. Further, when an image obtained by averaging L' images is used as the input training data, it satisfies H > L'. Note that the number of the ophthalmic images used for the base image is less than the number H.

The ophthalmic image may be a two-dimensional tomographic image of the tissue of the subject eye captured by the OCT device. The controller of the ophthalmic image processing device may acquire the plurality of base images obtained by capturing each of a plurality of positions different from each other in the tissue of the subject eye. The controller may acquire each of the target images at a plurality of positions by inputting each of the plurality of base images into the mathematical model. The controller may generate at least one of the three-dimensional tomographic image of the tissue and the two-dimensional front image at a sight of the tissue from the front (that is, a direction of the line of sight of the subject eye) based on the plurality of target images. That is, the ophthalmic image capturing device may execute at least one of the three-dimensional tomographic image generation step that generates a three-dimensional tomographic image of the tissue based on the plurality of target images and the front image generation step that generates a two-dimensional front image of the tissue based on the plurality of target images. In this case, the three-dimensional tomographic image or the two-dimensional front image of the tissue in which the influence of noise is suppressed is appropriately generated without capturing a large number of two-dimensional tomographic images.

The two-dimensional front image may be a so-called "Enface image". The Enface image data may be, for example, integrated image data in which the luminance values are integrated into the depth direction (Z direction) at each position in the XY directions, an integrated value of spectral data at each position in the XY directions, luminance data at each position in the XY directions in a certain depth direction, luminance data at each position in the XY directions in any layer of the retina (for example, the surface layer of the retina), or the like.

The ophthalmic image may be a two-dimensional tomographic image of the fundus of the subject eye captured by the OCT device. The controller of the ophthalmic image processing device may identify at least one of the plurality of layers included in the fundus by performing the analysis processing with respect to the target image which is the two-dimensional tomographic image. That is, the ophthalmic image processing device may execute the segmentation step of identifying the layer of the fundus from the acquired target image. In this case, the segmentation result in which the influence of noise is suppressed can be appropriately acquired without capturing a large number of two-dimensional tomographic images.

Note that it is also possible to use an image other than the two-dimensional tomographic image as the ophthalmic image. The ophthalmic image is not the two-dimensional tomographic image but a two-dimensional front image of the tissue (for example, the fundus) captured from the front (that is, the line of sight direction of the subject eye). In the present case, the two-dimensional front image is an OCT angio image. The OCT angio image may be, for example, a motion contrast image acquired by processing at least two OCT signals acquired at different times with respect to the same position. Further, an image obtained by capturing the autofluorescence (FAF) of the fundus of the subject eye by a scanning laser ophthalmoscopy (SLO) (hereinafter it is referred to as "FAF image") may be used as the ophthalmic image. Similar to the OCT two-dimensional tomographic image, the OCT angio image and the FAF image are also appropriately suppressed from the influence of noise by performing the average processing on the plurality of images. Further, the imaging site of the ophthalmic image may be, for example, the fundus of the subject eye or an anterior segment of the eye. As described above, as the ophthalmic image in the present disclosure, various images capable of suppressing the influence of noise by the average processing on the plurality of images can be used.

Further, the controller of the ophthalmic image processing device may execute the analysis processing that is different from the segmentation processing of identifying the layer with respect to the target image. For example, the controller may acquire a front image of the fundus showing blood vessels (for example, the OCT angio image described above) as the target image, and execute processing of analyzing the blood vessel density of the fundus with respect to the acquired target image. Further, the controller may perform the analysis processing with respect to an image generated based on the plurality of target images (for example, the above-mentioned three-dimensional tomographic image, Enface image, or the like).

The controller of the ophthalmic image processing device may execute at least one of the simultaneous display processing and the switching display processing. In the simultaneous display processing, the controller causes the display device to display the base image and the target image simultaneously. In the switching display processing, the controller switches between the base image and the target image to display one thereof on the display device in response to the instruction input by the user. In this case, the user can easily check both the target image in which the influence of noise is suppressed and the base image on which the target image is based (original image or the averaged image of original images). Therefore, the user can perform diagnosis and the like more appropriately. Note that the base image and the target image may be displayed on the same display device or may be displayed on different display devices.

The controller acquires the plurality of base images continuously captured by the ophthalmic image capturing device. The controller acquires the plurality of target images by sequentially inputting the plurality of acquired base images into the mathematical model. The controller generates the moving image data of the tissue based on the plurality of acquired target images. That is, the ophthalmic image processing device may execute the moving image generation step of generating the moving image data of the tissue based on the plurality of target images. In this case, the user can check the moving image of the tissue displayed in a state where the influence of noise is suppressed. That is, even with the technique in the related art, it is possible to suppress the influence of noise by averaging the plurality of ophthalmic images. However, in the technique in the related art, since one averaged image is created from the plurality of ophthalmic images, the frame rate tends to be significantly lowered when displaying the moving image of the tissue using the averaged image. In particular, when the imaging position changes with the passage of time or the like, it is difficult to generate a good moving image using the averaged images. In contrast, the ophthalmic image processing device of the present disclosure can generate the moving image of the tissue in which the influence of noise is suppressed while suppressing a decrease in the frame rate. Therefore, the user can perform diagnosis and the like more appropriately.

Note that the controller may display the moving image of the base images and the moving image of the target images on the display device simultaneously. Further, the controller may switch between the moving image of the base images and the moving image of the target images to display one thereof on the display device in response to the instruction input by the user. In this case, the user can easily check both the moving image of the target images and the moving image of the base images.

### Brief Description of Drawings

[FIG. 1] FIG. 1 is a block diagram illustrating a schematic configuration of a mathematical model building device 1, an ophthalmic image processing device 21, and an ophthalmic image capturing devices 11A and 11B.
[FIG. 2] FIG. 2 is a flowchart of mathematical model building processing executed by the mathematical model building device 1.
[FIG. 3] FIG. 3 is an explanatory diagram for explaining a first acquisition pattern of input training data and output training data.
[FIG. 4] FIG. 4 is an explanatory diagram for explaining a second acquisition pattern of the input training data and the output training data.
[FIG. 5] FIG. 5 is an explanatory diagram for explaining a third acquisition pattern of the input training data and the output training data.
[FIG. 6] FIG. 6 is an explanatory diagram for explaining a fourth acquisition pattern of the input training data and the output training data.
[FIG. 7] FIG. 7 is a flowchart of high quality moving image generation processing executed by the ophthalmic image processing device 21.
[FIG. 8] FIG. 8 is a flowchart of high quality three-dimensional image generation processing executed by the ophthalmic image processing device 21.
[FIG. 9] FIG. 9 is a diagram illustrating an example of a high quality three-dimensional image 40.

### Description of Embodiments

### (Device Configuration)

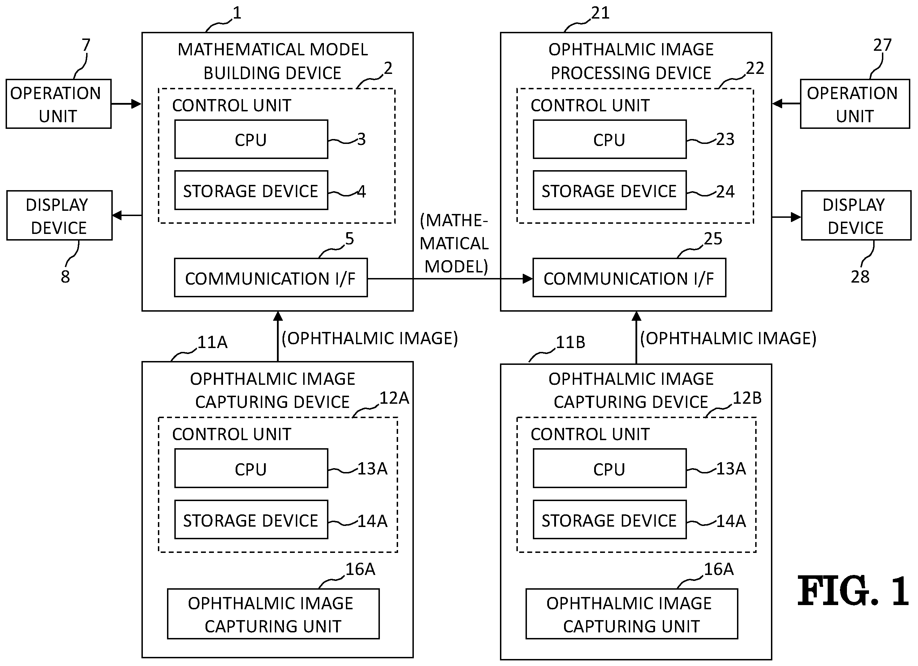

Hereinafter, one of the typical embodiments in the present disclosure will be described with reference to the drawings. As illustrated in FIG. 1, in the present embodiment, a mathematical model building device 1, an ophthalmic image processing device 21, and an ophthalmic image capturing devices 11A and 11B are used. The mathematical model building device 1 builds a mathematical model by training the mathematical model with using a machine learning algorithm. The built mathematical model outputs a target image having higher image quality (in the present embodiment, the influence of noise is appropriately suppressed) than a base image based on the input base image. The ophthalmic image processing device 21 acquires the target image from the base image by using the mathematical model. The ophthalmic image capturing devices 11A and 11B captures ophthalmic images which are images of a tissue of a subject eye.

As an example, a personal computer (hereinafter it is referred to as "PC") is used for the mathematical model building device 1 of the present embodiment. Although the details will be described later, the mathematical model building device 1 builds a mathematical model by training the mathematical model using ophthalmic images acquired from the ophthalmic image capturing device 11A. However, the device that can function as the mathematical model building device 1 is not limited to the PC. For example, the ophthalmic image capturing device 11A may function as the mathematical model building device 1. Further, controllers of a plurality of devices (for example, a CPU of the PC and a CPU 13A of the ophthalmic image capturing device 11A) may collaborate to build a mathematical model.

Further, a PC is used for the ophthalmic image processing device 21 of the present embodiment. However, the device that can function as the ophthalmic image processing device 21 is not limited to the PC. For example, the ophthalmic image capturing device 11B, a server, or the like may function as the ophthalmic image processing device 21. When the ophthalmic image capturing device (the OCT device in the present embodiment) 11B functions as the ophthalmic image processing device 21, the ophthalmic image capturing device 11B can appropriately acquire an ophthalmic image having higher image quality than the captured ophthalmic image while capturing ophthalmic images. Further, a mobile terminal such as a tablet terminal or a smartphone may function as the ophthalmic image processing device 21. Controllers of a plurality of devices (for example, a CPU of the PC and a CPU 13B of the ophthalmic image capturing device 11B) may collaborate to perform various processing.

Further, in the present embodiment, a case where a CPU is used as an example of a controller that performs various processing will be illustrated. However, it goes without saying that a controller other than the CPU may be used for at least a part of various devices. For example, by adopting a GPU as a controller, the processing speed may be increased.

The mathematical model building device 1 will be described. The mathematical model building device 1 is disposed, for example, in the ophthalmic image processing device 21 or a manufacturer that provides an ophthalmic image processing program to a user. The mathematical model building device 1 includes a control unit 2 that performs various control processing and a communication I/F 5. The control unit 2 includes a CPU 3 which is a controller that handles controls, and a storage device 4 capable of storing a program, data, and the like. The storage device 4 stores a mathematical model building program for executing mathematical model building processing (see FIG. 2) described later. Further, the communication I/F 5 connects the mathematical model building device 1 to other devices (for example, the ophthalmic image capturing device 11A and the ophthalmic image processing device 21).

The mathematical model building device 1 is connected to an operation unit 7 and a display device 8. The operation unit 7 is operated by the user in order for the user to input various instructions to the mathematical model building device 1. For the operation unit 7, for example, at least one of a keyboard, a mouse, a touch panel, and the like can be used. Note that a microphone or the like for inputting various instructions may be used together with the operation unit 7 or instead of the operation unit 7. The display device 8 displays various images. As the display device 8, various devices capable of displaying an image (for example, at least one of a monitor, a display, a projector, or the like) can be used. Note that the "image" in the present disclosure includes both a still image and a moving image.

The mathematical model building device 1 can acquire ophthalmic image data (hereinafter, it may be simply referred to as an "ophthalmic image") from the ophthalmic image capturing device 11A. The mathematical model building device 1 may acquire the ophthalmic image data from the ophthalmic image capturing device 11A by, for example, at least one of wired communication, wireless communication, an attachable and detachable storage medium (for example, a USB memory), and the like.

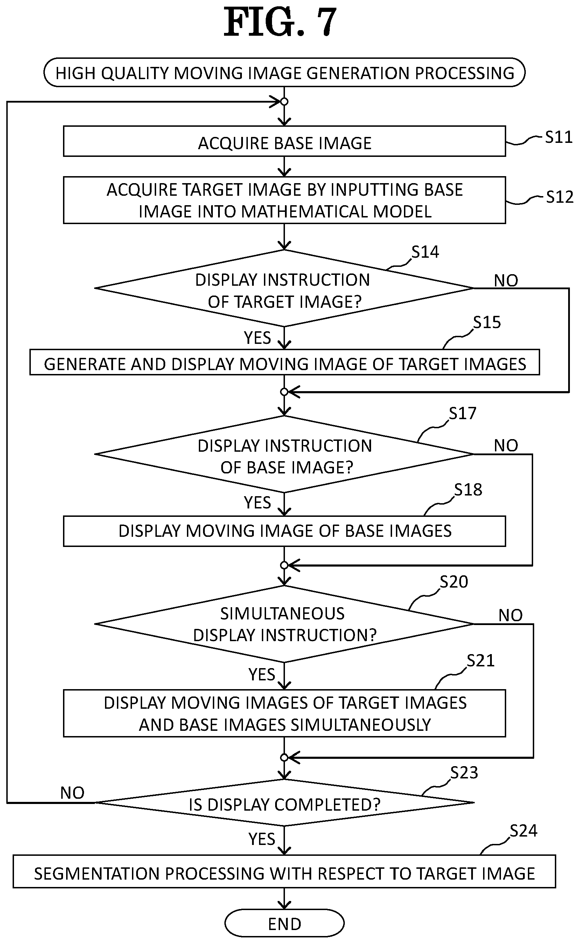

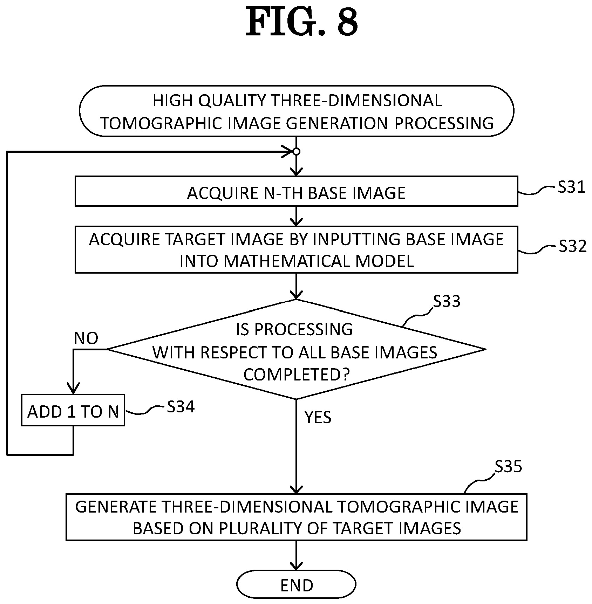

The ophthalmic image processing device 21 will be described. The ophthalmic image processing device 21 is disposed, for example, in a facility (for example, a hospital, a health examination facility, or the like) that performs diagnosis, examination, or the like of a person to be examined. The ophthalmic image processing device 21 includes a control unit 22 that performs various control processing and a communication I/F 25. The control unit 22 includes a CPU 23 which is a controller that handles controls, and a storage device 24 capable of storing a program, data, and the like. The storage device 24 stores an ophthalmic image processing program for executing ophthalmic image processing described later (for example, high quality moving image generation processing illustrated in FIG. 7, high quality three-dimensional image generation processing illustrated in FIG. 8 and the like). The ophthalmic image processing program includes a program that realizes a mathematical model built by the mathematical model building device 1. The communication I/F 25 connects the ophthalmic image processing device 21 to other devices (for example, the ophthalmic image capturing device 11B and the mathematical model building device 1).

The ophthalmic image processing device 21 is connected to the operation unit 27 and the display device 28. Various devices can be used for the operation unit 27 and the display device 28 in the same manner as the operation unit 7 and the display device 8 described above.

The ophthalmic image processing device 21 can acquire the ophthalmic image from the ophthalmic image capturing device 11B. The ophthalmic image processing device 21 may acquire the ophthalmic image from the ophthalmic image capturing device 11B by, for example, at least one of wired communication, wireless communication, an attachable and detachable storage medium (for example, a USB memory), and the like. Further, the ophthalmic image processing device 21 may acquire a program or the like for realizing the mathematical model built by the mathematical model building device 1 via communication or the like.

The ophthalmic image capturing devices 11A and 11B will be described. As an example, in the present embodiment, a case where the ophthalmic image capturing device 11A for providing the ophthalmic image to the mathematical model building device 1 and the ophthalmic image capturing device 11B for providing the ophthalmic image to the ophthalmic image processing device 21 are used, will be described. However, the number of ophthalmic image capturing devices used is not limited to two. For example, the mathematical model building device 1 and the ophthalmic image processing device 21 may acquire ophthalmic images from a plurality of ophthalmic image capturing devices. Further, the mathematical model building device 1 and the ophthalmic image processing device 21 may acquire the ophthalmic image from one common ophthalmic image capturing device. Note that the two ophthalmic image capturing devices 11A and 11B illustrated in the present embodiment have the same configuration. Therefore, the two ophthalmic image capturing devices 11A and 11B will be collectively described below.

Further, in the present embodiment, the OCT device is exemplified as the ophthalmic image capturing device 11 (11A, 11B). However, an ophthalmic image capturing device other than the OCT device (for example, a scanning laser ophthalmoscopy (SLO), a fundus camera, a corneal endothelial cell image capturing device (CEM), or the like) may be used.

The ophthalmic image capturing device 11 (11A, 11B) includes a control unit 12 (12A, 12B) that performs various control processing, and an ophthalmic image capturing unit 16 (16A, 16B). The control unit 12 includes a CPU 13 (13A, 13B) which is a controller that handles controls, and a storage device 14 (14A, 14B) capable of storing a program, data, and the like.

The ophthalmic image capturing unit 16 includes various configurations necessary for capturing an ophthalmic image of a subject eye. The ophthalmic image capturing unit 16 of the present embodiment is provided with an OCT light source, a branched optical element that branches OCT light emitted from the OCT light source into measurement light and reference light, a scanning unit for scanning the measurement light, an optical system for irradiating a subject eye with the measurement light, a light receiving element for receiving combined light of the light reflected by the tissue of the subject eye and the reference light, and the like.

The ophthalmic image capturing device 11 can capture a two-dimensional tomographic image and a three-dimensional tomographic image of the fundus of the subject eye. Specifically, the CPU 13 captures the two-dimensional tomographic image of a cross section intersecting a scan line by scanning the OCT light (measurement light) on the scan line. Further, the CPU 13 can capture a three-dimensional tomographic image of the tissue by scanning the OCT light two-dimensionally. For example, the CPU 13 acquires a plurality of two-dimensional tomographic images by scanning each of a plurality of scan lines having different positions with the measurement light in a two-dimensional area at a sight of the tissue from the front. Next, the CPU 13 acquires the three-dimensional tomographic image by combining the plurality of captured two-dimensional tomographic images.

Further, the CPU 13 captures a plurality of ophthalmic images of an identical region by scanning the same site on the tissue (on the same scan line in the present embodiment) a plurality of times with the measurement light. The CPU 13 can acquire an addition-arithmetic averaged image in which the influence of the speckle noise is suppressed by performing addition-arithmetic average processing with respect to the plurality of ophthalmic images of the identical region. The addition-arithmetic average processing may be performed, for example, by averaging pixel values of pixels at the same position in the plurality of ophthalmic images. When the number of images to be subjected to the addition-arithmetic average processing is large, the influence of the speckle noise is easily suppressed, but the imaging time becomes long. Note that the ophthalmic image capturing device 11 executes tracking processing of tracking a scanning position of the OCT light with the movement of the subject eye while capturing the plurality of ophthalmic images of the identical region.

### (Mathematical Model Building Processing)

The mathematical model building processing that is executed by the mathematical model building device 1 will be described with reference to FIGS. 2 to 6. The mathematical model building processing is executed by the CPU 3 according to the mathematical model building program stored in the storage device 4.

In the mathematical model building processing, the mathematical model for outputting a target image having high image quality from a base image is built by training the mathematical model using a training data set. Although details will be described later, the training data set includes the input training data and the output training data. In the present embodiment, as the input training data, data that is based on one to a plurality of ophthalmic images (in the present embodiment, it is a two-dimensional tomographic image of the fundus) is used. Further, as the output training data, data of the addition-arithmetic averaged image based on the ophthalmic images in which the number (H) of images thereof is larger than the number (L) of the ophthalmic images used for the input training data, is used. For the input training data and the output training data, the identical region of the tissue is used as an imaging target.

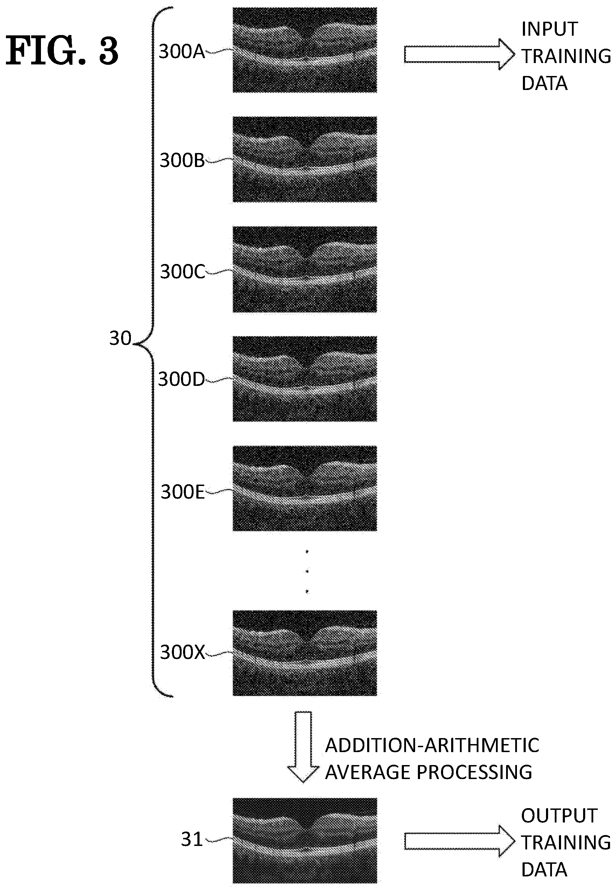

As illustrated in FIG. 2, the CPU 3 acquires a set 30 (see FIGS. 3 to 6) of a plurality of training ophthalmic images 300A to 300X (X is any integer of 2 or more) obtained by imaging the identical region of the tissue (S1). Specifically, in the present embodiment, a set of a plurality of two-dimensional tomographic images that are captured by scanning the same scan line on the fundus the plurality of times with the OCT light is acquired from the ophthalmic image capturing device 11A as a set of the training ophthalmic images. However, the CPU 3 may acquire a signal (for example, an OCT signal) that is a basis for generating a two-dimensional tomographic image from the ophthalmic image capturing device 11A and acquire a two-dimensional tomographic image by generating a two-dimensional tomographic image based on the acquired signal.

Next, the CPU 3 acquires the input training data from a part of the plurality of training ophthalmic images 300A to 300X in the set 30 (S2). A specific acquisition method of the input training data can be appropriately selected, and the details thereof will be described later with reference to FIGS. 3 to 6.

Next, the CPU 3 acquires the addition-arithmetic averaged image 31 (see FIGS. 3 to 6) of the plurality of training ophthalmic images 300A to 300X in the set 30 as output training data (S3). As described above, the number H of the training ophthalmic images used for the addition-arithmetic averaged image 31 that is the output training data is larger than the number of images L of the training ophthalmic images used for the input training data. As an example, in the present embodiment, as illustrated in FIGS. 3 to 6, all of the plurality of training ophthalmic images 300A to 300X (for example, 120 images) in the set 30 are used for the addition-arithmetic averaged image 31. Note that the addition-arithmetic averaged image 31 may be generated by the mathematical model building device 1. Further, the mathematical model building device 1 may acquire the addition-arithmetic averaged image 31 generated by the ophthalmic image capturing device 11A.

A first acquisition pattern of the input training data will be described with reference to FIG. 3. In the first acquisition pattern, the CPU 3 acquires the data of one training ophthalmic image 300A itself (that is, it is the original image in which the addition-arithmetic average processing is not performed) as the input training data of the plurality of training ophthalmic images 300A to 300X included in the set 30. In this case, it is preferable that the ophthalmic image processing device 21 inputs one original image into the mathematical model as the base image when the base image is input to the built mathematical model to acquire the target image. Since the ophthalmic image processing device 21 can acquire the target image based on one base image, the imaging time of the base image can be easily shortened. Further, when generating a moving image of the target images, it is easy to increase the frame rate of the moving image.

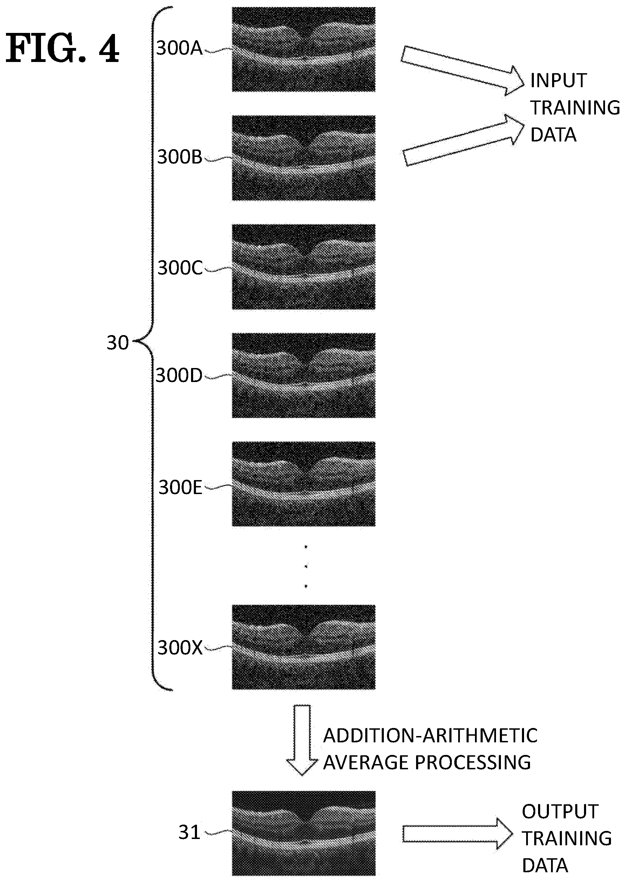

A second acquisition pattern of the input training data will be described with reference to FIG. 4. In the second acquisition pattern, the CPU 3 acquires, as input training data, data of the original images of the plurality of training ophthalmic images of the plurality of training ophthalmic images 300A to 300X included in the set 30. In the example illustrated in FIG. 4, the data of the two training ophthalmic images 300A and 300B are acquired as the input training data. However, the number of images of the training ophthalmic images that are acquired as input training data can be changed within a range smaller than the number of images of the training ophthalmic images used for the addition-arithmetic averaged image 31. In a case where the second acquisition pattern is adopted, when the base image is input to the built mathematical model, it is preferable that the ophthalmic image processing device 21 inputs the original images in which the number of images thereof is as close as possible to the number of images of the training ophthalmic images used as the input training data, into the mathematical model as the base images. In this case, the quality of the acquired target image is likely to be improved as compared with the case where one original image is input into the mathematical model as the base image. However, even when the second acquisition pattern is adopted, one original image may be input into the mathematical model as a base image. As described above, when the original image is used as the input training data, the number L of the original images, which is being used, becomes a number that is 1 or more, and smaller than the number of images used for the addition-arithmetic averaged image 31.

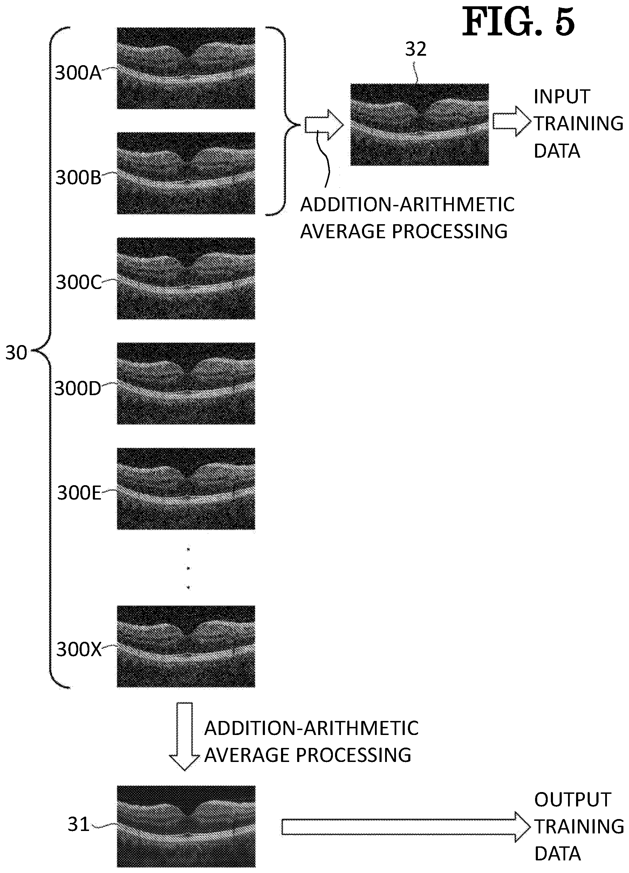

A third acquisition pattern of the input training data will be described with reference to FIG. 5. In the third acquisition pattern, of the plurality of training ophthalmic images 300A to 300X included in the set 30, the CPU 3 acquires, as input training data, data of the addition-arithmetic averaged image 32 obtained by addition-arithmetically averaging the L training ophthalmic images (L≥ 2). In the example illustrated in FIG. 5, the data of the addition-arithmetic averaged image 32 of the two training ophthalmic images 300A and 300B are acquired as the input training data. However, the number of images of the training ophthalmic images used for the addition-arithmetic averaged image 32 can be changed within a range smaller than the number of images of the training ophthalmic images used for the addition-arithmetic averaged image 31. In a case where the third acquisition pattern is adopted, when the ophthalmic image processing device 21 inputs the base image to the built mathematical model, it is preferable to input the addition-arithmetic averaged image as the base image. It is preferable that the number of images of the ophthalmic images used for addition-arithmetically averaging the base images is as close as possible to the number of images of the training ophthalmic images used for the addition-arithmetic averaged image 32. In this case, the quality of the acquired target image is likely to be improved as compared with the case where one original image is input into the mathematical model as the base image. However, even when the third acquisition pattern is adopted, one original image may be input into the mathematical model as a base image.

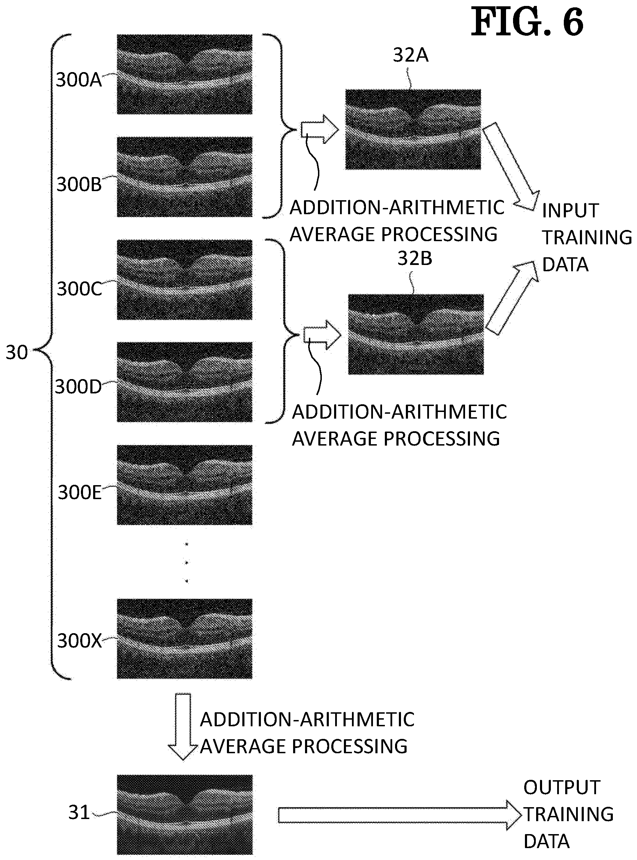

A fourth acquisition pattern of the input training data will be described with reference to FIG. 6. In the fourth acquisition pattern, the CPU 3 acquires a plurality of addition-arithmetic averaged images 32 obtained by addition-arithmetically averaging the L (L ≥ 2) training ophthalmic images and uses the data of the plurality of acquired addition-arithmetic averaged images 32 as the input training data. In the example illustrated in FIG. 6, the data of the two addition-arithmetic averaged images 32A and 32B are acquired as the input training data. However, it is also possible to change the number of addition-arithmetic averaged images 32. In a case where the fourth acquisition pattern is adopted, when the ophthalmic image processing device 21 inputs the base image to the built mathematical model, it is preferable to input a plurality of addition-arithmetic averaged image as the base images. In this case, the quality of the acquired target image is likely to be improved as compared with the case where one original image is input as the base image. However, even when the fourth acquisition pattern is adopted, one original image may be input into the mathematical model as a base image.

The four patterns described above are examples, and the above patterns can be changed. For example, the CPU 3 may use both the data of the original image of the P training ophthalmic images and the data of the addition-arithmetic averaged image 32 of the P' training ophthalmic images as the input training data. In this case, the number H of the training ophthalmic images used for the addition-arithmetic averaged image 31 that is the output training data is larger than the number of images (for example, the sum of P and P') of the training ophthalmic images used for the input training data.

Further, it is also possible to acquire a plurality of groups of training data sets from the set 30 of one group of the training ophthalmic images 300A to 300X. For example, in the example illustrated in FIG. 3, one group of training data sets is acquired in which the data of the training ophthalmic image 300A is used as the input training data and the data of the addition-arithmetic averaged image 31 is used as the output training data. The CPU 3 can also acquire a training data set from the same set 30 using the data of the training ophthalmic image 300B as the input training data and the data of the addition-arithmetic averaged image 31 as the output training data.

Returning to the description of FIG. 2. The CPU 3 uses the training data set and executes training of the mathematical model by using a machine learning algorithm (S4). As the machine learning algorithm, for example, a neural network, a random forest, a boosting, a support vector machine (SVM), and the like are generally known.

The neural network is a technique that mimics the behavior of biological nerve cell networks. The neural network includes, for example, a feed-forward (forward propagation) neural network, an RBF network (radial basis function), a spiking neural network, a convolutional neural network, a recursive neural network (a recurrent neural network, a feedback neural network, or the like), a stochastic neural network (a Boltzmann machine, a Basian network, or the like), or the like.

The random forest is a method of performing learning based on randomly sampled training data to generate a large number of decision trees. When using the random forest, branches of a plurality of decision trees that are trained in advance as an identifier are traced, and the average (or majority vote) of the results obtained from each decision tree is taken.

The boosting is a method of generating a strong identifier by combining a plurality of weak identifiers. A strong identifier is built by sequentially training a simple and weak identifier.

The SVM is a method of configuring two classes of pattern identifiers by using linear input elements. By using the training data, the SVM learns the parameters of the linear input element based on, for example, the criterion (hyperplane separation theorem) of obtaining the margin maximizing hyperplane that maximizes the distance from each data point.

The mathematical model refers, for example, to a data structure for predicting a relationship between the input data and the output data. The mathematical model is built by being trained with the training data set. The training data set is a set of input training data and output training data. The mathematical model is trained so that when certain input training data is input, the corresponding output training data is output. For example, correlation data of each of input and output (for example, weights) is updated by training.

In the present embodiment, a multi-layer neural network is used as a machine learning algorithm. The neural network includes an input layer for inputting data, an output layer for generating data to be predicted, and one or more hidden layers between the input layer and the output layer. A plurality of nodes (also called units) are disposed in each layer. Specifically, in the present embodiment, a convolutional neural network (CNN), which is a kind of multi-layer neural network, is used. However, other machine learning algorithms may be used. For example, a hostile generative network (Generative adversarial networks: GAN) that utilizes two competing neural networks may be adopted as a machine learning algorithm.

The processes S1 to S4 are repeated until the building of the mathematical model is completed (S5: NO). When the building of the mathematical model is completed (S5: YES), the mathematical model building processing ends. The program and data for realizing the built mathematical model are incorporated in the ophthalmic image processing device 21.

### (Ophthalmic Image Processing)

Ophthalmic image processing executed by the ophthalmic image processing device 21 will be described with reference to FIGS. 7 to 9. The ophthalmic image processing is executed by the CPU 23 according to the ophthalmic image processing program stored in the storage device 24.

High quality moving image generation processing, which is an example of the ophthalmic image processing, will be described with reference to FIG. 7. In the high quality moving image generation processing, a still image of a target image having high image quality is acquired using the mathematical model, and a moving image of the tissue having high image quality is generated.

First, the CPU 23 acquires the base image which is an ophthalmic image (still image) (S11). The base image of the present embodiment is a two-dimensional tomographic image of the fundus, similar to the above-mentioned training ophthalmic images 300A to 300X. By inputting the base image into the mathematical model described above, the CPU 23 acquires the target image having higher image quality than that of the base image (S12).

In the example illustrated in FIG. 7, the ophthalmic image capturing device 11B captures the moving image by continuously capturing the two-dimensional tomographic image of the fundus. In S11, the CPU 23 sequentially acquires each of the still images constituting the moving image captured by the ophthalmic image capturing device 11B. The CPU 23 acquires at least one of the acquired original image of the still image and the addition-arithmetic averaged image obtained by addition-arithmetically averaging a plurality of original images as the base images to be input into the mathematical model. The CPU 23 continuously acquires the target image by sequentially inputting the continuously acquired base images into the mathematical model.

The type of the base image acquired in S11 (at least one of the original image and the addition-arithmetic averaged image) and the number of images of the original images used for the base image to be input into the mathematical model may be appropriately set according to the above-mentioned acquisition pattern of input training data and the like. When the addition-arithmetic averaged image is used as the base image to be input into the mathematical model, the CPU 23 may acquire the addition-arithmetic averaged image by addition-arithmetically averaging the plurality of ophthalmic images obtained by capturing the same imaging site. Further, the CPU 23 may acquire the addition-arithmetic averaged image generated by the ophthalmic image capturing device 11B.

Note that in the high quality moving image generation processing illustrated in FIG. 7, the moving image of the tissue is generated. In order to generate a good moving image, it is desirable to increase the frame rate (the number of still images per unit time) as much as possible. That is, in order to increase the frame rate of the moving image of the target images, it is necessary to increase the number of target images (still images) acquired per unit time as much as possible. Therefore, in S11 in FIG. 7, it is preferable that as few original images as possible are acquired as the base image to be input into the mathematical model. For example, each time one original image is acquired from the ophthalmic image capturing device 11B, by inputting the acquired one original image into the mathematical model and generating the target image, the CPU 23 can generate a moving image having the same frame rate as the moving image captured by the ophthalmic image capturing device 11B by using the target image having high image quality.

Next, the CPU 23 determines whether or not the instruction for displaying the target image on the display device 28, is input (S14). In the present embodiment, the user can input the instruction, which indicates which of the target image, the base image, and both the target image and the base image is displayed on the display device 28, to the ophthalmic image processing device 21 by operating the operation unit 27. When the instruction for displaying the target image is not input (S14: NO), the process proceeds to S17 directly. When the instruction for displaying the target image is input (S14: YES), the CPU 23 causes the display device 28 to display the target image (S15). Specifically, in S15 of the present embodiment, a plurality of target images continuously acquired in S12 are sequentially displayed on the display device 28, so that the moving image of the tissue is displayed. That is, the high quality moving image of the tissue being captured is displayed on the display device 28 in real time based on the moving image of the original images captured at that time by the ophthalmic image capturing device 11B. Note that the CPU 23 may generate the moving image data of the target image based on the plurality of target images that are continuously acquired in S12 and store the generated data in the storage device.

Note that the ophthalmic image processing device 21 can input the instruction, which indicates which of the target image, the base image, and both the target image and the base image is displayed on the display device 28, by using various methods. For example, the CPU 23 may display an icon for inputting the display instruction of the target image, an icon for inputting the display instruction of the base image, and an icon for inputting the display instruction of both images on the display device 28. The user may input the display instruction to the ophthalmic image processing device 21 by selecting the desired icon.

Next, the CPU 23 determines whether or not the instruction for displaying the base image on the display device 28, is input (S17). When it is not input (S17: NO), the process proceeds to S20 directly. When the instruction for displaying the base image is input (S17: YES), the CPU 23 causes the display device 28 to display the base image (S18). Specifically, in S18 of the present embodiment, a plurality of base images continuously acquired in S11 are sequentially displayed on the display device 28, so that the moving image of the tissue is displayed. As described above, the CPU 23 can switch between the target image and the base image to display one thereof on the display device 28 in response to the instruction input by the user. Therefore, the user can easily check both the target image and the base image.

Next, the CPU 23 determines whether or not the instruction for displaying the target image and the base image on the display device 28 simultaneously, is input (S20). When it is not input (S20: NO), the process proceeds to S23 directly. When the simultaneous display instruction is input (S20: YES), the CPU 23 causes the display device 28 to display the target image and the base image simultaneously. Specifically, in S20 of the present embodiment, both the moving image of the target images and the moving image of the base images are displayed on the display device 28.

Note that in S15, S18, and S21, a still image may be displayed instead of the moving image. The CPU 23 may switch between displaying the moving image and displaying the still image in response to the instruction that is input by the user. Further, the CPU 23 may store at least one data of the moving image and the still image in the storage device 24 without displaying the moving image and the still image on the display device 28.

Further, when the moving image or the still image of the target image is displayed on the display device 28, the CPU 23 can display on the display device 28 the number of ophthalmic images used in the addition-arithmetic averaged image that corresponds to the target image. For example, in a case of building the mathematical model, when the addition-arithmetic averaged image 32 used as the output training data is an addition-arithmetic averaged image based on H ophthalmic images, the target image acquired in S12 is also an image corresponding to the addition-arithmetic averaged image of H ophthalmic images. Therefore, the CPU 23 causes the display device 28 to display that the target image being displayed corresponds to the addition-arithmetic averaged image of the H ophthalmic images. Therefore, the user can appropriately recognize the quality of the target image.

Further, for example, there are a plurality of timings for displaying the target image, such as a timing for displaying the target image in real time during imaging by the ophthalmic image capturing device 11B, a timing for causing the user to check whether the captured image is good, and a timing for displaying the analysis result or a report after imaging. The CPU 23 can separately input the instruction, which indicates which of the target image, the base image, and both the target image and the base image is displayed on the display device 28, for each of the plurality of timings at which the target image can be displayed. That is, the user can set in advance whether to display the target image, the base image, or both the target image and the base image on the display device 28 according to the timing at which the target image can be displayed. As a result, the convenience of the user is further improved.

Next, the CPU 23 determines whether or not the instruction for ending the display is input (S23). When it is not input (S23: NO), the process returns to S11, and the processes of S11 to S23 are repeated. When the instruction for ending the display is input (S23: YES), the CPU 23 executes segmentation processing with respect to the target image (in the present embodiment, at least one of the plurality of target images acquired continuously) (S24). The segmentation processing is processing of identifying at least one of a plurality of layers of the tissue shown in the image. The layer identification may be performed, for example, by image processing with respect to the target image, or the mathematical model trained with using the machine learning algorithm may be used for the layer identification. By performing the segmentation processing with respect to the target image, the segmentation result in which the influence of noise is suppressed is appropriately acquired. Note that in some cases, the user operates the operation unit 27 to manually perform the segmentation processing. In this case as well, the CPU 23 may display the target image on the display device 28 as the target image on which the segmentation processing is performed.

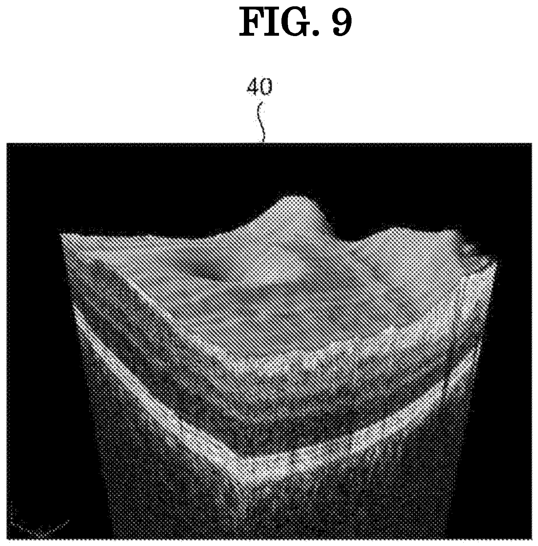

High quality three-dimensional tomographic image generation processing, which is an example of ophthalmic image processing, will be described with reference to FIGS. 8 and 9. In the high quality three-dimensional tomographic image generation processing, the two-dimensional tomographic image and the three-dimensional tomographic image having high image quality are acquired using the mathematical model. When the high quality three-dimensional tomographic image generation processing is executed, the ophthalmic image capturing device 11B captures a three-dimensional tomographic image of the tissue by causing the OCT light (the measurement light) to scan two-dimensionally. Specifically, the ophthalmic image capturing device 11B acquires a plurality of two-dimensional tomographic images (first to Z-th) by scanning each of a plurality of scan lines having different positions with the measurement light in a two-dimensional area at the sight of the tissue from the front. The three-dimensional tomographic image is acquired by combining a plurality of two-dimensional tomographic images.

Of the plurality of two-dimensional tomographic images (first to Z-th) captured by the ophthalmic image capturing device 1B, the CPU 23 acquires the N-th (the initial value of N is "1") two-dimensional tomographic image as the base image (S31). The CPU 23 acquires the N-th target image by inputting the acquired base image into the mathematical model (S32). Next, the CPU 23 determines whether or not the processes for all of the plurality of base images (first to Z-th) is completed (S33). When it is not completed (S33: NO), "1" is added to a value of N (S34), and the process returns to S31. The processes of S31 to S33 are repeated until the processing with respect to all the base images are completed.

When the processing with respect to all the base images are completed (S33: YES), the three-dimensional tomographic image 40 (see FIG. 9) of the tissue is generated by combining the plurality of acquired target images (S35). According to the high quality three-dimensional tomographic image generation processing illustrated in FIG. 8, even when the addition-arithmetic averaged image is not used as each of the two-dimensional tomographic images that constitute the three-dimensional tomographic image, the three-dimensional tomographic image is generated by using the target image in which the influence of noise is suppressed as much as the addition-arithmetic averaged image.

The CPU 23 can also generate an image other than the three-dimensional tomographic image based on the plurality of target images. For example, the CPU 23 may generate a two-dimensional front image (so-called "Enface image") at the sight of the tissue from the front, based on the plurality of target images acquired in S32.

Further, the CPU 23 can also perform analysis processing with respect to the three-dimensional tomographic image 40 generated based on the plurality of target images. For example, the CPU 23 may perform the segmentation processing with respect to the three-dimensional tomographic image 40 to extract at least one of the plurality of layers contained in the fundus. The CPU 23 may generate a thickness map that two-dimensionally shows the thickness distribution of at least one of the layers based on the result of the segmentation processing. In this case, the thickness map is appropriately generated based on the three-dimensional tomographic image 40 in which the influence of noise is suppressed.

Further, the CPU 23 may generate the two-dimensional tomographic image at any position in the tissue included in the imaging range of the three-dimensional tomographic image 40 based on the three-dimensional tomographic image 40 generated based on the plurality of target images. The CPU 23 may display the generated two-dimensional tomographic image on the display device 28. As an example, the CPU 23 of the present embodiment inputs the instruction from the user for designating a position for generating a tomographic image. For example, the user may designate a generation position of the tomographic image on the two-dimensional front image or the three-dimensional tomographic image 40 displayed on the display device 28 by operating the operation unit 27. The generation position of the tomographic image may be designated by, for example, lines of various shapes (lines on a straight line, a circular line, or the like). The CPU 23 may generate (extract) the two-dimensional tomographic image at a position designated by the user from the three-dimensional tomographic image 40. In this case, the tomographic image at any position desired by the user is appropriately generated based on the three-dimensional tomographic image 40 in which the influence of noise is suppressed.

Further, the CPU 23 may determine whether or not the ophthalmic image captured by the ophthalmic image capturing device 11B is good every time one or a plurality of ophthalmic images are captured. When it is determined that the captured ophthalmic image is good, the CPU 23 may input the good ophthalmic image into the mathematical model as the base image. Further, when it is determined that the captured ophthalmic image is not good, the CPU 23 may output the instruction for recapturing the ophthalmic image at the same position to the ophthalmic image capturing device 11B. In this case, the target image is acquired based on the good base image. Note that a specific method for determining whether or not the captured ophthalmic image is good can be appropriately selected. For example, the CPU 23 may determine whether or not the ophthalmic image is good by using the strength of the signal of the captured ophthalmic image or an index (for example, signal strength index (SSI) or quality index (QI), or the like) indicating the goodness of the signal. Further, the CPU 23 may determine whether or not the ophthalmic image is good by comparing the captured ophthalmic image with the template.

Further, when the analysis processing (for example, the segmentation processing or the like) with respect to any of the plurality of target images is performed, the CPU 23 may extract a good image from the plurality of target images or the plurality of base images on which the plurality of target images are based. The CPU 23 may perform the analysis processing with respect to the extracted good target image or the target image based on the good base image. In this case, the accuracy of the analysis processing is improved. Note that as a method for extracting a good image, for example, various methods such as the above-mentioned method using the SSI or the like can be adopted.

Further, when generating a motion contrast image, the CPU 23 may acquire a target image using the mathematical model exemplified in the present disclosure and generate a motion contrast image based on the acquired target image. As described above, when the motion contrast image is generated, a plurality of OCT signals are acquired at different times with respect to the same position, and arithmetic processing is performed with respect to the plurality of OCT signals. The CPU 23 may acquire a motion contrast image by acquiring the target image based on each of the plurality of OCT signals (two-dimensional tomographic images) and performing the arithmetic processing with respect to the plurality of acquired target images. In this case, the motion contrast image in which the influence of noise is suppressed is appropriately generated.

The techniques disclosed in the above embodiments are merely examples. Therefore, it is possible to modify the techniques exemplified in the above embodiments. First, it is also possible to implement only some of the plurality of techniques exemplified in the above embodiments. For example, the ophthalmic image processing device 21 may execute only one of the high quality moving image generation processing (see FIG. 7) and the high quality three-dimensional tomographic image generation processing (see FIG. 8).

Note that the processing of acquiring the base image in S11 in FIG. 7 and S31 in FIG. 8 is an example of a "base image acquisition step". The processing of acquiring the target image in S12 in FIG. 7 and S32 in FIG. 8 is an example of a "target image acquisition step". The processing of generating the three-dimensional tomographic image in S35 in FIG. 8 is an example of a "three-dimensional tomographic image generation step". The segmentation processing illustrated in S24 in FIG. 7 is an example of a "segmentation step". The processing of switching between the target image and the base image to display one thereof in S14 to S18 in FIG. 7 is an example of "switching display processing" and a "switching display step". The processing of displaying the target image and the base image simultaneously in S21 in FIG. 7 is an example of "simultaneous display processing" and a "simultaneous display step". The processing of generating the moving image data of the target image in S15 in FIG. 7 is an example of a "moving image generation step". The processing of acquiring the training ophthalmic image set 30 in S1 in FIG. 2 is an example of an "image set acquisition step". The processing of building the mathematical model in S2 to S4 in FIG. 2 is an example of a "training step".

### Reference Signs List

1 mathematical model building device
3 CPU
4 storage device
11 ophthalmic image capturing device
21 ophthalmic image processing device
23 CPU
24 storage device
28 display device
30 set
31 addition-arithmetic averaged image
32 addition-arithmetic averaged image
300 training ophthalmic image

## Claims

1. An ophthalmic image processing device (21) that processes an ophthalmic image which is an image of a tissue of a subject eye, comprising:
a controller (22) configured to:
acquire, as a base image, an ophthalmic image captured by an ophthalmic image capturing device (11A, 11B) or an averaged image obtained by averaging a plurality of ophthalmic images obtained by imaging an identical region of a tissue by the ophthalmic image capturing device (11A, 11B);
acquire a target image having higher image quality than that of the base image by inputting the base image into a mathematical model trained with using a machine learning algorithm;
wherein the mathematical model is trained with:
using data based on an L, wherein L ≥ 1, training ophthalmic image, as input training data, among a plurality of training ophthalmic images obtained by imaging an identical region of a tissue; and
using data of averaged image obtained by averaging H, wherein H > L, training ophthalmic images, as output training data, among the plurality of training ophthalmic images, and
the ophthalmic image is a two-dimensional front image of a tissue, and the two-dimensional front image is an OCT angio image,
wherein the controller (22) is configured to:
acquire a plurality of the base images continuously captured by the ophthalmic image capturing device;
acquire a plurality of the target images by sequentially inputting the plurality of the acquired base images into the mathematical model; and
generate moving image data of the tissue based on the plurality of the acquired target images.

2. The ophthalmic image processing device (21) according to claim 1,
wherein the controller (22) is configured to execute at least one of simultaneous display processing of displaying the base image and the target image on a display device (28) simultaneously, and switching display processing of switching between the base image and the target image to display one thereof on the display device (28) in response to an input instruction.

3. An OCT device (11) that captures an ophthalmic image of a tissue of a subject eye by processing an OCT signal derived from reference light and reflected light of measurement light with which the tissue is irradiated, comprising:
a controller (12) configured to:
acquire, as a base image, captured ophthalmic image of the tissue or an averaged image obtained by averaging a plurality of ophthalmic images obtained by imaging an identical region of the tissue; and
acquire a target image having higher image quality than that of the base image by inputting the base image into a mathematical model trained with using a machine learning algorithm,
wherein the mathematical model is trained with:
using data based on an L, wherein L ≥ 1, training ophthalmic image, as input training data, among a plurality of training ophthalmic images obtained by imaging an identical region of a tissue; and
using data of averaged image obtained by averaging H, wherein H > L, training ophthalmic images, as output training data, among the plurality of training ophthalmic images, and
the ophthalmic image is a two-dimensional front image of a tissue, and the two-dimensional front image is an OCT angio image,
wherein the controller (22) is further configured to:
acquire a plurality of the base images continuously captured by the ophthalmic image capturing device;
acquire a plurality of the target images by sequentially inputting the plurality of the acquired base images into the mathematical model; and
generate moving image data of the tissue based on the plurality of the acquired target images.

4. An ophthalmic image processing program executed by an ophthalmic image processing device (21) that processes an ophthalmic image which is an image of a tissue of a subject eye, the program being executed by a controller (22) of the ophthalmic image processing device (21) to cause the ophthalmic image processing device (21) to execute:
a base image acquisition step of acquiring, as a base image, an ophthalmic image captured by an ophthalmic image capturing device (11A, 11B) or an averaged image obtained by averaging a plurality of ophthalmic images obtained by imaging an identical region of a tissue by the ophthalmic image capturing device (11A, 11B); and
a target image acquisition step of acquiring a target image having higher image quality than that of the base image by inputting the base image into a mathematical model trained with using a machine learning algorithm,
wherein the mathematical model is trained with:
using data based on an L, wherein L ≥ 1, training ophthalmic image, as input training data, among a plurality of training ophthalmic images obtained by imaging an identical region of a tissue; and
using data of the averaged image obtained by averaging H, wherein H > L, training ophthalmic images, as output training data, among the plurality of training ophthalmic images, and
the ophthalmic image is a two-dimensional front image of a tissue, and the two-dimensional front image is an OCT angio image,
wherein the program causes the ophthalmic image processing device (21) to further execute:
acquire a plurality of the base images continuously captured by the ophthalmic image capturing device;
acquire a plurality of the target images by sequentially inputting the plurality of the acquired base images into the mathematical model; and
generate moving image data of the tissue based on the plurality of the acquired target images.

5. A high quality moving image generation method comprising a mathematical model building method performed by a mathematical model building device (1) that builds a mathematical model, which is built by being trained with using a machine learning algorithm and outputs a target image by inputting a base image, the mathematical model building method comprising:
an image set acquisition step of acquiring a plurality of training ophthalmic images obtained by imaging an identical region of a tissue of a subject eye; and
a training step of building the mathematical model by training the mathematical model with:
using data based on an L, wherein L ≥ 1, training ophthalmic image, as input training data, among the plurality of training ophthalmic images; and
using data of averaged image obtained by averaging H, wherein H > L, training ophthalmic images, as output training data, among the plurality of training ophthalmic images,
wherein the ophthalmic image is a two-dimensional front image of a tissue, and the two-dimensional front image is an OCT angio image,
and the high quality moving image generation method further comprising:
acquiring a plurality of the base images continuously captured by the ophthalmic image capturing device;
acquiring a plurality of the target images by sequentially inputting the plurality of the acquired base images into the mathematical model; and
generating moving image data of the tissue based on the plurality of the acquired target images.

## Patentansprüche

1. Ophthalmische Bildverarbeitungsvorrichtung (21), die ein ophthalmisches Bild verarbeitet, das ein Bild eines Gewebes eines Auges eines Subjekts ist, umfassend:
eine Steuerung (22), die konfiguriert ist zum:
Erfassen, als ein Basisbild, eines ophthalmischen Bilds, das durch eine ophthalmische Bilderfassungsvorrichtung (11A, 11B) erfasst wird, oder eines gemittelten Bilds, das durch Mitteln einer Vielzahl von ophthalmischen Bildern erhalten wird, die durch Abbilden eines identischen Bereichs eines Gewebes durch die ophthalmische Bilderfassungsvorrichtung (11A, 11B) erhalten werden;
Erfassen eines Zielbilds mit einer höheren Bildqualität als die des Basisbilds durch Eingeben des Basisbilds in ein mathematisches Modell, das unter Verwendung eines Maschinenlernalgorithmus trainiert wird;
wobei das mathematische Modell trainiert wird mit:
Verwenden von Daten basierend auf einem L, wobei L ≥ 1, ophthalmischen Trainingsbild, als Eingabetrainingsdaten, unter einer Vielzahl von ophthalmischen Trainingsbildern, die durch Abbilden eines identischen Bereichs eines Gewebes erhalten werden; und
Verwenden von Daten eines gemittelten Bilds, das durch Mitteln von H, wobei H > L, ophthalmischen Trainingsbildern erhalten wird, als Ausgabetrainingsdaten, unter der Vielzahl von ophthalmischen Trainingsbildern, und
wobei das ophthalmische Bild ein zweidimensionales Vorderbild eines Gewebes ist und das zweidimensionale Vorderbild ein OCT-Angiobild ist,
wobei die Steuerung (22) konfiguriert ist zum:
Erfassen einer Vielzahl der Basisbilder, die kontinuierlich durch die ophthalmische Bilderfassungsvorrichtung erfasst werden;
Erfassen einer Vielzahl der Zielbilder durch sequenzielles Eingeben der Vielzahl der erfassten Basisbilder in das mathematische Modell; und
Erzeugen von Bewegtbilddaten des Gewebes basierend auf der Vielzahl der erfassten Zielbilder.

2. Ophthalmische Bildverarbeitungsvorrichtung (21) nach Anspruch 1,
wobei die Steuerung (22) konfiguriert ist zum Ausführen von mindestens einem von gleichzeitiger Anzeigeverarbeitung zum gleichzeitigen Anzeigen des Basisbildes und des Zielbildes auf einer Anzeigevorrichtung (28) und Umschalten der Anzeigeverarbeitung zum Umschalten zwischen dem Basisbild und dem Zielbild, um eines davon auf der Anzeigevorrichtung (28) als Reaktion auf eine Eingabeanweisung anzuzeigen.

3. OCT-Vorrichtung (11), die ein ophthalmisches Bild eines Gewebes eines Auges eines Subjekts durch Verarbeiten eines OCT-Signals erfasst, das von Referenzlicht und reflektiertem Licht von Messlicht abgeleitet ist, mit dem das Gewebe bestrahlt wird, umfassend:
eine Steuerung (12), die konfiguriert ist zum:
Erfassen, als ein Basisbild, eines erfassten ophthalmischen Bilds des Gewebes oder eines gemittelten Bilds, das durch Mitteln einer Vielzahl von ophthalmischen Bildern erhalten wird, die durch Abbilden eines identischen Bereichs des Gewebes erhalten werden; und
Erfassen eines Zielbilds mit einer höheren Bildqualität als die des Basisbilds durch Eingeben des Basisbilds in ein mathematisches Modell, das unter Verwendung eines Maschinenlernalgorithmus trainiert wird,
wobei das mathematische Modell trainiert wird mit:
Verwenden von Daten basierend auf einem L, wobei L ≥ 1, ophthalmischen Trainingsbild, als Eingabetrainingsdaten, unter einer Vielzahl von ophthalmischen Trainingsbildern, die durch Abbilden eines identischen Bereichs eines Gewebes erhalten werden; und
Verwenden von Daten eines gemittelten Bilds, das durch Mitteln von H, wobei H > L, ophthalmischen Trainingsbildern erhalten wird, als Ausgabetrainingsdaten, unter der Vielzahl von ophthalmischen Trainingsbildern, und
wobei das ophthalmische Bild ein zweidimensionales Vorderbild eines Gewebes ist und das zweidimensionale Vorderbild ein OCT-Angiobild ist,
wobei die Steuerung (22) ferner konfiguriert ist zum:
Erfassen einer Vielzahl der Basisbilder, die kontinuierlich durch die ophthalmische Bilderfassungsvorrichtung erfasst werden;
Erfassen einer Vielzahl der Zielbilder durch sequenzielles Eingeben der Vielzahl der erfassten Basisbilder in das mathematische Modell; und
Erzeugen von Bewegtbilddaten des Gewebes basierend auf der Vielzahl der erfassten Zielbilder.

4. Ophthalmisches Bildverarbeitungsprogramm, das durch eine ophthalmische Bildverarbeitungsvorrichtung (21) ausgeführt wird, die ein ophthalmisches Bild verarbeitet, das ein Bild eines Gewebes eines Auges eines Subjekts ist, wobei das Programm durch eine Steuerung (22) der ophthalmischen Bildverarbeitungsvorrichtung (21) ausgeführt wird, um die ophthalmische Bildverarbeitungsvorrichtung (21) zu veranlassen, Folgendes auszuführen:
einen Basisbilderfassungsschritt des Erfassens, als ein Basisbild, eines ophthalmischen Bilds, das durch eine ophthalmische Bilderfassungsvorrichtung (11A, 11B) erfasst wird, oder eines gemittelten Bilds, das durch Mitteln einer Vielzahl von ophthalmischen Bildern erhalten wird, die durch Abbilden eines identischen Bereichs eines Gewebes durch die ophthalmische Bilderfassungsvorrichtung (11A, 11B) erhalten werden; und
einen Zielbilderfassungsschritt des Erfassens eines Zielbilds mit einer höheren Bildqualität als die des Basisbilds durch Eingeben des Basisbilds in ein mathematisches Modell, das unter Verwendung eines Maschinenlernalgorithmus trainiert wird,
wobei das mathematische Modell trainiert wird mit:
Verwenden von Daten basierend auf einem L, wobei L ≥ 1, ophthalmischen Trainingsbild, als Eingabetrainingsdaten, unter einer Vielzahl von ophthalmischen Trainingsbildern, die durch Abbilden eines identischen Bereichs eines Gewebes erhalten werden; und
Verwenden von Daten des gemittelten Bilds, das durch Mitteln von H, wobei H > L, ophthalmischen Trainingsbildern erhalten wird, als Ausgabetrainingsdaten, unter der Vielzahl von ophthalmischen Trainingsbildern, und
wobei das ophthalmische Bild ein zweidimensionales Vorderbild eines Gewebes ist und das zweidimensionale Vorderbild ein OCT-Angiobild ist,
wobei das Programm die ophthalmische Bildverarbeitungsvorrichtung (21) veranlasst, ferner Folgendes auszuführen:
Erfassen einer Vielzahl der Basisbilder, die kontinuierlich durch die ophthalmische Bilderfassungsvorrichtung erfasst werden;
Erfassen einer Vielzahl der Zielbilder durch sequenzielles Eingeben der Vielzahl der erfassten Basisbilder in das mathematische Modell; und
Erzeugen von Bewegtbilddaten des Gewebes basierend auf der Vielzahl der erfassten Zielbilder.

5. Bewegtbilderzeugungsverfahren mit hoher Qualität, umfassend ein mathematisches Modellaufbauverfahren, das durch eine mathematische Modellaufbauvorrichtung (1) durchgeführt wird, die ein mathematisches Modell aufbaut, das aufgebaut wird, indem es unter Verwendung eines Maschinenlernalgorithmus trainiert wird, und ein Zielbild durch Eingeben eines Basisbilds ausgibt, wobei das mathematische Modellaufbauverfahren umfasst:
einen Bildsatzerfassungsschritt des Erfassens einer Vielzahl von Trainingsbildern, die durch Abbilden eines identischen Bereichs eines Gewebes eines Auges eines Subjekts erhalten werden; und
einen Trainingsschritt des Aufbauens des mathematischen Modells durch Trainieren des mathematischen Modells mit:
Verwenden von Daten basierend auf einem L, wobei L ≥ 1, ophthalmischen Trainingsbild, als Eingabetrainingsdaten, unter der Vielzahl von ophthalmischen Trainingsbildern; und
Verwenden von Daten eines gemittelten Bilds, das durch Mitteln von H, wobei H > L, ophthalmischen Trainingsbildern erhalten wird, als Ausgabetrainingsdaten, unter der Vielzahl von ophthalmischen Trainingsbildern,
wobei das ophthalmische Bild ein zweidimensionales Vorderbild eines Gewebes ist und das zweidimensionale Vorderbild ein OCT-Angiobild ist,
und wobei das Bewegtbilderzeugungsverfahren mit hoher Qualität ferner umfasst:
Erfassen einer Vielzahl der Basisbilder, die kontinuierlich durch die ophthalmische Bilderfassungsvorrichtung erfasst werden;
Erfassen einer Vielzahl der Zielbilder durch sequenzielles Eingeben der Vielzahl der erfassten Basisbilder in das mathematische Modell; und
Erzeugen von Bewegtbilddaten des Gewebes basierend auf der Vielzahl der erfassten Zielbilder.

## Revendications

1. Dispositif de traitement d'image ophtalmique (21) qui traite une image ophtalmique qui est une image d'un tissu d'un oeil d'un sujet, comprenant :
un dispositif de commande (22) configuré pour :
acquérir, en tant qu'image de base, une image ophtalmique capturée par un dispositif de capture d'image ophtalmique (11A, 11B) ou une image moyennée obtenue en moyennant une pluralité d'images ophtalmiques obtenues en imageant une région identique d'un tissu par le dispositif de capture d'image ophtalmique (11A, 11B) ;
acquérir une image cible ayant une qualité d'image supérieure à celle de l'image de base en entrant l'image de base dans un modèle mathématique entraîné à l'aide d'un algorithme d'apprentissage automatique ;
dans lequel le modèle mathématique est entraîné avec :
l'utilisation de données basées sur une image ophtalmique d'entraînement L, où L ≥ 1, en tant que données d'entraînement d'entrée, parmi une pluralité d'images ophtalmiques d'entraînement obtenues en imageant une région identique d'un tissu ; et
l'utilisation de données d'image moyennée obtenues en moyennant H, où H > L, images ophtalmiques d'entraînement, en tant que données d'entraînement de sortie, parmi la pluralité d'images ophtalmiques d'entraînement, et
l'image ophtalmique est une image frontale bidimensionnelle d'un tissu, et l'image frontale bidimensionnelle est une angio-image OCT,
dans lequel le dispositif de commande (22) est configuré pour :
acquérir une pluralité des images de base capturées en continu par le dispositif de capture d'image ophtalmique ;
acquérir une pluralité des images cibles en entrant séquentiellement la pluralité des images de base acquises dans le modèle mathématique ; et
générer des données d'image mobile du tissu sur la base de la pluralité des images cibles acquises.

2. Dispositif de traitement d'image ophtalmique (21) selon la revendication 1,
dans lequel le dispositif de commande (22) est configuré pour exécuter au moins l'un d'un traitement d'affichage simultané consistant à afficher l'image de base et l'image cible sur un dispositif d'affichage (28) simultanément, et d'un traitement d'affichage de commutation consistant à commuter entre l'image de base et l'image cible pour afficher l'une de celles-ci sur le dispositif d'affichage (28) en réponse à une instruction d'entrée.

3. Dispositif OCT (11) qui capture une image ophtalmique d'un tissu d'un oeil d'un sujet en traitant un signal OCT dérivé d'une lumière de référence et d'une lumière réfléchie d'une lumière de mesure avec laquelle le tissu est irradié, comprenant :
un dispositif de commande (12) configuré pour :
acquérir, en tant qu'image de base, une image ophtalmique capturée du tissu ou une image moyennée obtenue en moyennant une pluralité d'images ophtalmiques obtenues en imageant une région identique du tissu ; et
acquérir une image cible ayant une qualité d'image supérieure à celle de l'image de base en entrant l'image de base dans un modèle mathématique entraîné à l'aide d'un algorithme d'apprentissage automatique,
dans lequel le modèle mathématique est entraîné avec :
l'utilisation de données basées sur une image ophtalmique d'entraînement L, où L ≥ 1, en tant que données d'entraînement d'entrée, parmi une pluralité d'images ophtalmiques d'entraînement obtenues en imageant une région identique d'un tissu ; et
l'utilisation de données d'image moyennée obtenues en moyennant H, où H > L, images ophtalmiques d'entraînement, en tant que données d'entraînement de sortie, parmi la pluralité d'images ophtalmiques d'entraînement, et
l'image ophtalmique est une image frontale bidimensionnelle d'un tissu, et l'image frontale bidimensionnelle est une angio-image OCT,
dans lequel le dispositif de commande (22) est en outre configuré pour :
acquérir une pluralité des images de base capturées en continu par le dispositif de capture d'image ophtalmique ;
acquérir une pluralité des images cibles en entrant séquentiellement la pluralité des images de base acquises dans le modèle mathématique ; et
générer des données d'image mobile du tissu sur la base de la pluralité des images cibles acquises.

4. Programme de traitement d'image ophtalmique exécuté par un dispositif de traitement d'image ophtalmique (21) qui traite une image ophtalmique qui est une image d'un tissu d'un oeil d'un sujet, le programme étant exécuté par un dispositif de commande (22) du dispositif de traitement d'image ophtalmique (21) pour amener le dispositif de traitement d'image ophtalmique (21) à exécuter :
une étape d'acquisition d'image de base consistant à acquérir, en tant qu'image de base, une image ophtalmique capturée par un dispositif de capture d'image ophtalmique (11A, 11B) ou une image moyennée obtenue en moyennant une pluralité d'images ophtalmiques obtenues en imageant une région identique d'un tissu par le dispositif de capture d'image ophtalmique (11A, 11B) ; et
une étape d'acquisition d'image cible consistant à acquérir une image cible ayant une qualité d'image supérieure à celle de l'image de base en entrant l'image de base dans un modèle mathématique entraîné à l'aide d'un algorithme d'apprentissage automatique,
dans lequel le modèle mathématique est entraîné avec :
l'utilisation de données basées sur une image ophtalmique d'entraînement L, où L ≥ 1, en tant que données d'entraînement d'entrée, parmi une pluralité d'images ophtalmiques d'entraînement obtenues en imageant une région identique d'un tissu ; et
l'utilisation de données de l'image moyennée obtenue en moyennant H, où H > L, images ophtalmiques d'entraînement, en tant que données d'entraînement de sortie, parmi la pluralité d'images ophtalmiques d'entraînement, et
l'image ophtalmique est une image frontale bidimensionnelle d'un tissu, et l'image frontale bidimensionnelle est une angio-image OCT,
dans lequel le programme amène le dispositif de traitement d'image ophtalmique (21) à exécuter en outre :
l'acquisition d'une pluralité des images de base capturées en continu par le dispositif de capture d'image ophtalmique ;
l'acquisition d'une pluralité des images cibles en entrant séquentiellement la pluralité des images de base acquises dans le modèle mathématique ; et
la génération de données d'image mobile du tissu sur la base de la pluralité des images cibles acquises.

5. Procédé de génération d'image mobile de haute qualité comprenant un procédé de construction de modèle mathématique réalisé par un dispositif de construction de modèle mathématique (1) qui construit un modèle mathématique, qui est construit en étant entraîné à l'aide d'un algorithme d'apprentissage automatique et délivre en sortie une image cible en entrant une image de base, le procédé de construction de modèle mathématique comprenant :
une étape d'acquisition d'ensemble d'images consistant à acquérir une pluralité d'images ophtalmiques d'entraînement obtenues en imageant une région identique d'un tissu d'un oeil d'un sujet ; et
une étape d'entraînement consistant à construire le modèle mathématique en entraînant le modèle mathématique avec :
l'utilisation de données basées sur une image ophtalmique d'entraînement L, où L ≥ 1, en tant que données d'entraînement d'entrée, parmi la pluralité d'images ophtalmiques d'entraînement ; et
l'utilisation de données d'image moyennée obtenues en moyennant H, où H > L, images ophtalmiques d'entraînement, en tant que données d'entraînement de sortie, parmi la pluralité d'images ophtalmiques d'entraînement,
dans lequel l'image ophtalmique est une image frontale bidimensionnelle d'un tissu, et l'image frontale bidimensionnelle est une angio-image OCT,
et le procédé de génération d'image mobile de haute qualité comprenant en outre :
l'acquisition d'une pluralité des images de base capturées en continu par le dispositif de capture d'image ophtalmique ;
l'acquisition d'une pluralité des images cibles en entrant séquentiellement la pluralité des images de base acquises dans le modèle mathématique ; et
la génération de données d'image mobile du tissu sur la base de la pluralité des images cibles acquises.
